# EUROPEAN PATENT SPECIFICATION

(11) **EP 3 943 388 B1**
(45) Date of publication and mention of the grant of the patent: **04.12.2024**
(21) Application number: 20778333.3
(22) Date of filing: 13.03.2020
(51) Int. Cl.: B64C 25/32, B64C 27/08, B64C 39/02, B64U 10/13, B64U 70/30, C09J 133/00, C09J 133/06, C09J 175/04, C09J 183/04, F16B 11/00, C09J 7/38, C09J 7/20, C09J 7/00, C08G 18/42, C08G 18/44, C08G 18/48, C08G 18/73, C08G 18/75, C08G 18/76

(54) **COMPOSITE BODY, UNMANNED AIRCRAFT, METHOD FOR MANUFACTURING COMPOSITE BODY, AND STRUCTURE**
VERBUNDKÖRPER, UNBEMANNTES FLUGZEUG, VERFAHREN ZUR HERSTELLUNG EINES VERBUNDKÖRPERS UND STRUKTUR
CORPS COMPOSITE, AÉRONEF SANS PILOTE, PROCÉDÉ DE FABRICATION DE CORPS COMPOSITE, ET STRUCTURE

(30) Priority: 22.03.2019 JP 2019054101
(43) Date of publication of application: 26.01.2022
(73) Proprietor: National Institute for Materials Science, Tsukuba-shi, Ibaraki 305-0047 (JP)
(72) Inventor: HOSODA Naoe, Tsukuba-shi, Ibaraki 305-0047 (JP); KIMURA Kenichi, Sapporo-shi, Hokkaido 002-8502 (JP)
(74) Representative: V.O.
(86) International application number: PCT/JP2020/011204
(87) International publication number: WO 2020/195977

(56) References cited:
- JP-A- 2003 519 267
- JP-A- 2010 501 027
- US-A- 3 267 052
- US-A- 3 964 832
- US-A1- 2004 071 870
- US-A1- 2005 148 984
- US-A1- 2005 181 629
- US-A1- 2008 169 059
- US-A1- 2008 280 085
- US-A1- 2010 319 111
- US-A1- 2011 104 430
- HAESHIN LEE ET AL: "A reversible wet/dry adhesive inspired by mussels and geckos", NATURE, vol. 448, no. 7151, 19 July 2007 (2007-07-19), London, pages 338 - 341, XP055298747, ISSN: 0028-0836, DOI: 10.1038/nature05968

## Description

### TECHNICAL FIELD

The present invention relates to a method of producing a composite, as well as an unmanned aircraft.

### BACKGROUND

It is known that an adhesive sheet using a pressure-sensitive adhesive for re-peeling which can be peeled off without causing any adhesive residue on an adherend even after a certain period of time has elapsed after the adhesive sheet is stuck on the adherend. Patent Document 1 describes an adhesive sheet using "the pressure-sensitive adhesive composition for re-peeling which includes a main adhesive (P) composed of a (meth)acrylate copolymer having a weight average molecular weight of 300,000 to 900,000 which is obtained by polymerizing 88.0 to 98.9 mass% of an alkyl (meth)acrylate monomer (A), 1.0 to 10.0 mass% of a vinyl monomer having a carboxyl group (B) and 0.1 to 2.0 mass% of a vinyl monomer having a secondary hydroxyl group (C); and a polyfunctional isocyanate crosslinking agent (Q)".

### [Patent Documents]

[Patent Document 1]: Japanese Unexamined Patent Application, First Publication No. 2010-174087.
US 2008/169059 and Haeshin Lee et al. ("A reversible wet/dry adhesive inspired by mussels and geckos", Nature, 448, no. 7151(2007)338-341, XP055298747, London, ISSN: 0028-0836, DOI:10.1038/nature05968)) disclose certain structures, comprising an adhesive part that comprises an adhesive, which can be reattached.
US 2005/148984 discloses an adhesive material in which a plurality of gecko-like synthetic setae stand on a base material.
JP 2003 519267 discloses an adhesive microstructure in which a polymer layer is deposited on a substrate and etched.
US 2008/280085 discloses a fibrillated adhesive in which a plurality of fibers are attached to a base material.
JP 2010 501027 discloses a nanostructural adhesive obtained by applying a copolymer of dihydroxyphenyl derivative modified acrylate and 2-methoxyethyl acrylate on the nanostructured adhesive on a PDMS support made of nano-sized keratinized hair designed to mimic the foot pads of a gecko.

### SUMMARY OF INVENTION

### [Problems to Be Solved by the Invention]

A pressure-sensitive adhesive sheet is used in various fields such as the production process of an electronic equipment, and in recent years, an increasingly high adhesive strength has been required. Further, particularly when the pressure-sensitive adhesive sheet is used in the production process of an electronic equipment, a so-called "rework" may be performed in which the pressure-sensitive adhesive sheet is peeled off from a member in order to reuse the member in the product. However, in general, a pressure-sensitive adhesive sheet which can be more firmly fixed to an adherend tends to be more difficult to peel from the adherend. When the adhering strength with the adherend is increased, the pressure-sensitive adhesive sheet itself may be broken during the peeling operation, or an adhesive layer may be peeled within the layer (inside its thickness).

Further, in the case of adhering to an adherend having a complicated surface shape, the adhesive layer used for the pressure-sensitive adhesive sheet is required to be soft and to have a good elongation, but when such an adhesive is used, adhesive residue is sometimes caused when peeling.

Thus, it is difficult to achieve both high adhesion and followability to the surface shape of the adherend by adjusting the composition of the adhesive.

Accordingly, it is an object of the present invention to provide a composite which can achieve both excellent followability and excellent adhesion to an adherend. It is also an object of the present invention to provide an unmanned aircraft, a method of producing a composite, and a structure.

### [Means for Solving Problems]

The inventors of the present invention have studied diligently to achieve the above objects, and have found that the objects can be achieved by the following embodiments.
[1] A method according to claims 1 and 4, a composite according to claim 8, as well as an unmanned aircraft according to claim 10.

### [Effect of the Invention]

According to the present invention, it is possible to provide a composite which can achieve both excellent followability to an adherend and excellent adhesion (Hereinafter, it is also referred to as "having the effect of the present invention".).

### BRIEF DESCRIPTION OF DRAWINGS

Figure 1 illustrates a mechanism by which a fly forms a bristle during a pupal process.
Figure 2 is a schematic diagram illustrating an example of an embodiment of a structure of a composite.
Figure 3 is a stereomicrograph of a structure adhered to a glass plate.
Figure 4 is a schematic diagram of a structure according to another embodiment.
Figure 5 is a schematic diagram of a composite according to an embodiment of the present invention.
Figure 6 is a schematic diagram of a composite according to another embodiment of the present invention.
Figure 7 is a perspective view of an unmanned aircraft.
Figure 8 is a block diagram illustrating the functional configuration of an unmanned aircraft.
Figure 9 is a top view of an unmanned aircraft in the form that the body is temporarily fixed to an adherend by using the composite.
Figure 10 is a schematic view of a temporary support with fibers obtained in this step.
Figure 11 is a schematic representation of a fiber immersed in a composition.
Figure 12 is a schematic representation of a temporary support with fibers taken from the composition.
Figure 13 illustrates the steps of separating a structure from the temporary support and fixing a shaft member to the support to obtain the composite.
Figure 14 is a schematic representation of a support with an annular fiber.
Figure 15 is a schematic representation of a support with an annular fiber immersed in a composition.
Figure 16 is a schematic representation of a support with annular fibers taken from the composition.
Figure 17 is a schematic diagram of a temporary support with fibers obtained in this step in a modified embodiment of an embodiment of the present invention.
Figure 18 is a schematic representation of a modified embodiment of the present invention in which fibers are immersed in a composition.
Figure 19 is a schematic diagram of a temporary support with fibers taken from a composition in a variation of an embodiment of the present invention.
Figure 20 is an explanatory diagram illustrating steps of separating a structure from a temporary support, securing a shaft member to the support, and obtaining a composite in a modified embodiment of the present invention.

### DESCRIPTION OF THE INVENTION

Hereinafter, the present invention will be described in detail.

The following description of the configuration requirements may be based on embodiments of the invention, but the invention is not limited to such embodiments.

In the present specification, a numerical range represented by "to" means a range including numerical values described before and after "to" as a lower limit value and an upper limit value.

In the present specification, "(meth)acrylate" means "at least one of acrylate and methacrylate", and "(meth)acrylic" means at least one of "methacrylic" and "acrylic".

In addition, in the present specification, in the description of the classification, the symbol ";" shall be used as a symbol indicating the division of the classification.

### [COMPOSITE]

A composite according to an embodiment of the present invention is a composite having a support and a plurality of structures fixed to at least one surface of the support. The structure has a shaft member made from a flexible material extending from a proximal end fixed to the support, and an adhesive part arranged at a distal end of the shaft member.

Although a mechanism by which the effect of the present invention can be obtained by the above-described composite is not clear, the present inventors have speculated as follows. The following mechanism is conjecture, and the present invention includes the case where the effect of the present invention can be obtained by a mechanism different from the following mechanism.

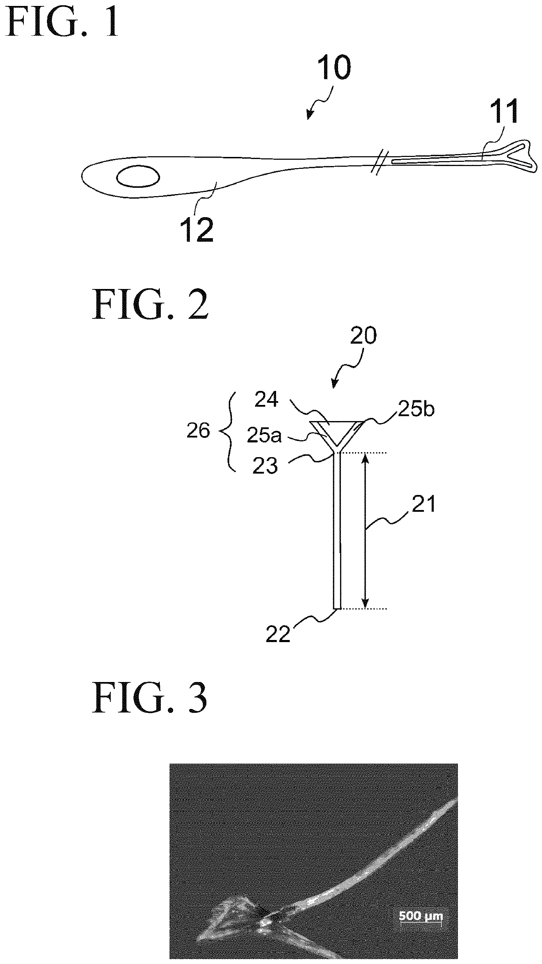

The present inventors have focused on the adhesive leg structure of a small animal capable of detachably fixing itself to an adherend having various surface shapes. Among them, the mechanism by which a fly forms a bristle in a pupal process (Figure 1) was discovered, and the structure of the structure, which is one of the features of the composite according to the embodiment of the present invention, was conceived.

As shown in Figure 1, during the formation of a fly bristle 10, an actin fiber 11 forms a spatula-like framework at a bristle distal end, and then along that framework (or around the framework) cuticle is secreted from the cells 12 to complete the shape. Such setae contribute greatly to expression of an adhesive leg function in a fly. Conventionally, it has been known that the bristle of fly has attachable/detachable adhesion to the adherend, but it is not clear how the complicated shape (a spatula structure) is formed. The present inventors have discovered the bristle-forming mechanism through continuous efforts, and based on the above findings, have developed a method of efficiently producing a structure similar to the bristle via a production method to be described later, and thus have completed the present invention.

The composite has a plurality of structures fixed to at least one surface of the support. The structure has a shaft member extending from a proximal end fixed to the support, and an adhesive part arranged at the distal end of the shaft member. Each of the adhesive parts is adhered to the adherend. In this case, the adhesive part and the support are connected by a shaft member made from a flexible material. Since the shaft member is flexible, the adhesive part can freely move within a predetermined range determined by a length of the shaft member.

Since each adhesive part freely moves and adheres to the adherend, it is easy to follow the surface shape of the adherend. Further, since the contact area between the adherend and the support is large, the composite has excellent adhesion and excellent followability to the surface shape of the adherend. The structure of this composite will be described below.

### < Structure>

The structure of the composite has a shaft member made from a flexible material and an adhesive part arranged at the distal end of the shaft member.

Figure 2 is a schematic view showing an example of an embodiment of a structure of the present composite. A structure 20 has a spatula-like structure having a shaft member 21 (range between dashed lines in Figure 2) having a proximal end 22 and a distal end 23, and an adhesive part 26 arranged at the distal end 23 of the shaft member. The adhesive part 26 comprises a film-like pressure-sensitive adhesive 24 held between a fiber 25a and a fiber 25b (hereinafter collectively referred to as "fibers 25").

Figure 3 is a stereomicrograph showing a structure which is adhered to a glass plate. In Figure 3, the portion that appears whiter than the background represents the structure, and it can be seen that the shaft member extends from the adhesive part adhered to the glass plate. It should be noted that, in Figure 3, the shaft member seems to extend from the adhesive part in a bifurcated manner, but the lower portion of the photograph (shown as a shorter portion) is a reflection image of the shaft member by a glass plate.

As described above, since the structure has the shaft member made from a flexible material, the structure can be deformed in accordance with the surface shape of the adherend and can exhibit excellent adhesion.

Returning to Figure 2, the length of the shaft member 21 is not particularly limited, and may be appropriately determined according to the surface roughness of the adherend. That is, if the surface roughness of the adherend is larger, the length of the shaft member may be longer. The length is not particularly limited. For example, if a size of the adhesive part is about 2 mm, the length of the shaft member is preferably 6 mm to 12 mm. The diameter (thickness) of the cross section of the shaft member is not particularly limited, and may be appropriately determined according to the elastic modulus of the flexible material to be described later. The specific thickness is not particularly limited, but generally 1 µm to 500 µm is preferable.

The structure 20 has a film-like pressure sensitive adhesive 24 held between a pair of fibers 25. As used herein, a film means a shape having a maximum diameter (width) of about 10 µm to 5 mm and having a shape such as a circular shape, a semicircular shape, a sector shape, a polygonal shape, a spherical shape, a flat spherical shape, a long spherical shape, a cylindrical shape, or a triangular columnar shape.

The thickness of the fibers 25 of the adhesive part 26 is not particularly limited, but in relation to the production method to be described later, the thickness is preferably less than the thickness of the shaft member, and more preferably less than half the thickness of the shaft member.

Although the adhesive part 26 of the structure 20 is made from a film-like pressure-sensitive adhesive held between a pair of fibers 25, the structure of the composite is not limited to the above.

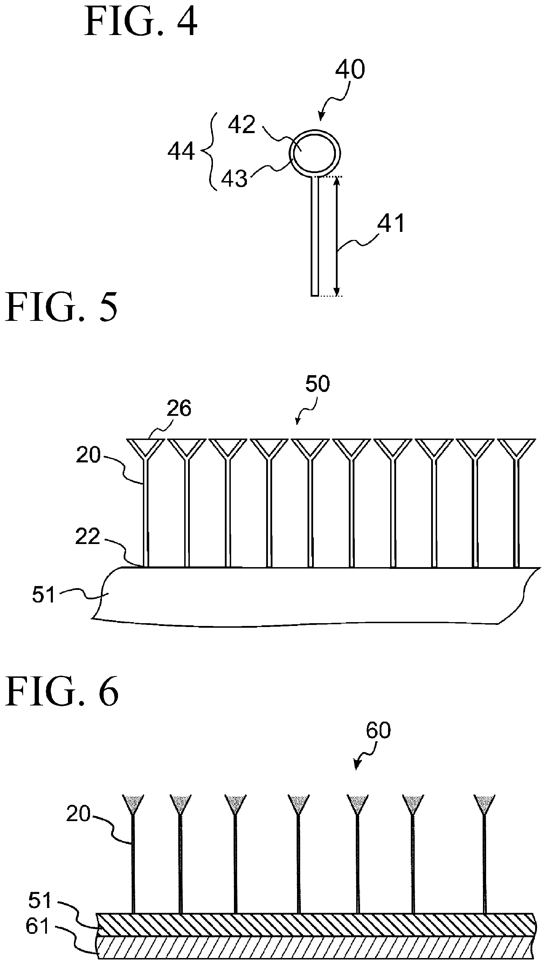

Figure 4 is a schematic view of a structure according to another embodiment. A structure 40 shown in Figure 4 has a shaft member 41 and an adhesive part 44 disposed at the distal end of the shaft member. The adhesive part 44 includes a pressure-sensitive adhesive 24 surrounded by a fiber 43. In Figure 4, the adhesive part 44 is circular, but may be elliptical or polygonal.

Returning to Figure 2, the structure 20 has a shaft member 21 having a proximal end 22 and a distal end 23, respectively, and an adhesive part 26 disposed at the distal end 23, but the structure used in the composite is not limited to the above, and a plurality of proximal ends and/or distal ends (and adhesive parts) may be provided. For example, a shaft member may extend from one proximal end, and the shaft member may branch in the middle to form a plurality of distal ends, and an adhesive part may be disposed at each distal end, or vice versa (a plurality of proximal ends and a single distal end), or the shaft member may have a plurality of proximal ends and a plurality of distal ends. Adhesive parts may be disposed on all or a part of each distal end.

Figure 5 is a schematic view of a composite. A composite 50 has a plurality of structures 20 fixed to one surface of a support 51, and the structure 20 is fixed to the support 51 on a proximal end 22 side, and the adhesive part 26 is directed outward to the support, and the adhesive part 26 can adhere to the adherend. Although the structure is fixed to one surface of the support 51 in Figure 5, the present composite is not limited to the above and may have a composite on both surfaces. The method of adhering the structure to the support is not particularly limited, and the structure may be fixed to the support by using an adhesive, for example, and the materials etc. constituting each part will be described below.

### (Flexible Material)

As used herein, the term "flexible material" means a material which can be elastically deformed by a stress at the time of crimping to the adherend in relation to the adhesive part described later. In other words, whether or not the material is flexible can be defined by whether or not the material is elastically deformable in relation to the stress required for the initial adhesion between the adhesive part and the adherend. The above description is intended to explain the definition of the flexible material, and the external force may not be applied when the composite is adhered to the adherend.

Since the structure has the shaft member made from the flexible material, the shaft member is deformed according to the surface structure of the adherend when the structure is adhered to the adherend. Therefore, the composite has excellent followability. In addition, due to the repulsive force of the shaft member, the adhesive part described later is easily pressed against the surface of the adherend, and as a result, the composite has a better adhesion to the adherend.

As the flexible material, a known material can be used. Examples of the flexible material include an organic material, an inorganic material, and a composite thereof.

The inorganic material may include, but is not limited to, a metal, and a glass.

The organic material is not particularly limited, but for example, a resin can be used. The resin is not particularly limited, but, for example, an olefin resin, an acrylic resin, a styrene resin, a halogen-containing resin, a vinyl ester resin, a polyester resin, a polyamide resin, a polycarbonate resin, a polyurethane resin, a poly(thio)ether resin, a polysulfone resin, a polyether ketone resin, a polyimide resin, a polyacetal resin, a cellulose ester resin (cellulose acetate, etc.), and a thermoplastic elastomer can be used.

Examples of the poly(thio)ether-based resin include a polyphenylene ether-based resin and a polysulfide-based resin such as a polyphenylene sulfide-based resin. Examples of the polysulfone resin include a polysulfone resin and a polyether sulfone resin. Examples of the polyether ketone resin include a polyphenylene ether ketone resin. Examples of the polyimide resin include a polyetherimide resin, a polyamideimide resin, and a polybenzimidazole resin. Examples of the cellulose ester resin include a cellulose acetate. Examples of the thermoplastic elastomer include a polyamide-based elastomer such as a polyamide-polyether block copolymer, a polyester-based elastomer, a polyurethane-based elastomer, a polystyrene-based elastomer, a polyolefin-based elastomer, and a fluorinated thermoplastic elastomer.

The organic material may contain one kind of the resin alone or two or more kinds thereof.

Examples of the olefin-based resin include an α-olefin homopolymer or copolymer, an ethylene-(meth)acrylic acid copolymer, an ethylene-(meth)acrylic ester copolymer, and an ethylene-norbomene copolymer. Examples of the α-olefin homopolymer or copolymer include a polyethylene, a polypropylene, and an ethylene-propylene copolymer.

Examples of the acrylic resin include a homopolymer or copolymer of a (meth)acrylic monomer. Examples of the homopolymer or copolymer of the (meth)acrylic monomer include a poly(meth)acrylate such as a poly methyl(meth)acrylate, a methyl methacrylate-(meth)acrylic acid copolymer, a methyl methacrylate-acrylate-(meth)acrylic acid copolymer, a methyl methacrylate-(meth)acrylate copolymer, and a (meth)acrylatestyrene copolymer.

Examples of the styrene-based resin include a homopolymer or copolymer of a styrene-based monomer such as a polystyrene, a styrene-vinyltoluene copolymer, and a styrene-α-methylstyrene copolymer;
a copolymer of a styrene-based monomer and a copolymerizable monomer, such as a styrene-acrylonitrile copolymer, a (meth)acrylate-styrene copolymer, and a styrene-maleic anhydride copolymer; and
a styrene-butadiene block copolymer, an impact resistant polystyrene (HIPS), an acrylonitrile-butadiene-styrene copolymer (ABS resin), and a methyl methacrylate-butadiene rubber-styrene copolymer (MBS resin).

Examples of the halogen-containing resin include a polyvinyl chloride-based resin, a vinyl chloride-vinyl acetate copolymer, a vinylidene chloride-based resin, and a polyfluorocarbon resin.

In addition, a vinyl ester-based resin such as a polyvinyl acetate and an ethylenevinyl acetate copolymer; a polyvinyl acetal resin such as a polyvinyl formal and a polyvinyl butyral can also be used.

Examples of the polyester-based resin include a polyalkylene-arylate resin wherein the alkylene has 2 to 6 carbon atoms, a polycycloalkylene-alylate resin wherein the cloalkylene has 6 to 10 carbon atoms, an aromatic polyester resin, a poly(alkylene glycol-aliphatic dicarboxylate) wherein the alkylene has 2 to 6 carbon atoms and the aliphatic has 2 to 10 carbon atoms, a polyoxycarboxylic acid resin, and a lactone resin; and a copolymer thereof.

Examples of the polyalkylene-arylate resin wherein the alkylene has 2 to 6 carbon atoms include a polyethylene terephthalate, a poly(trimethylene terephthalate), a polypropylene terephthalate, a polybutylene terephthalate, a polyethylene naphthalate, and a polybutylene naphthalate.

Examples of the polycycloalkylene-allylate resin wherein the cloalkylene has 6 to 10 carbon atoms include a poly(1,4-cyclohexyldimethylene terephthalate).

Examples of the aromatic polyester-based resin include a polyarylate resin and a liquid crystalline polyester.

Examples of the poly(alkylene glycol-aliphatic dicarboxylate) wherein the alkylene has 2 to 6 carbon atoms and the aliphatic has 2 to 10 carbon atoms include a poly(alkylene succinate) wherein the alkylene has 2 to 6 carbon atoms and a poly(alkylene adipate) wherein the alkylene has 2 to 6 carbon atoms.

Examples of the polyoxycarboxylic acid resin include a polyglycolic acid, a polylactic acid, and a glycolic acid-lactic acid copolymer.

Examples of the lactone resin include a polycaprolactone.

Examples of the copolymer include a polycaprolactone-polybutylene succinate copolymer resin.

Examples of the polyamide-based resin include an aliphatic polyamide, an alicyclic polyamide, and an aromatic polyamide.

Examples of the aliphatic polyamide resin include a copolymer of an aliphatic diamine component and an aliphatic dicarboxylic acid component. Examples of the aliphatic diamine component include a tetramethylenediamine, a hexamethylenediamine, a trimethylhexamethylenediamine, and a dodecanediamine.

Examples of the aliphatic dicarboxylic acid component include an adipic acid, a sebacic acid, and a dodecanedioic acid.

A homopolyamide or copolyamide of a lactam or an aminocarboxylic acid can also be used. The lactam includes a lactam having about 4 to 20 carbon atoms such as an ε-caprolactam and an ω-laurolactam. The aminocarboxylic acid includes an aminocarboxylic acid having about 4 to 20 carbon atoms such as an ω-aminoundecanoic acid and an ω-aminododecanoic acid.

Specific examples of the aliphatic polyamide-based resin include a polyamide 6, a polyamide 11, a polyamide 12, a polyamide 46, a polyamide 66, a polyamide 610, a polyamide 611, a polyamide 612, a polyamide 613, a polyamide 1010, a polyamide 1012, a polyamide 1212, a polyamide 66/11, a polyamide 6/12, a polyamide 66/12, a polyamide 610/12, and a polyamide 6/12/612.

Examples of the alicyclic polyamide resin include a homopolyamide and a copolyamide obtained by polymerizing at least one kind selected from an alicyclic diamine component and an alicyclic dicarboxylic acid component as a monomer, and, for example, include an alicyclic polyamide obtained by using an alicyclic diamine and/or an alicyclic dicarboxylic acid as at least a part of the diamine component and the dicarboxylic acid component.

Examples of the alicyclic diamine component include a diaminocycloalkane (diamino cycloalkane having 5 to 10 carbons) such as a diaminocyclohexane; a bis (aminocycloalkyl) alkane such as a bis(4-aminocyclohexyl) methane, a bis(4-amino-3-methylcyclohexyl) methane, a 2,2-bis(4'-aminocyclohexyl) propane; and a hydrogenated xylylenediamine;.

The alicyclic diamine component may have a substituent such as an alkyl group (an alkyl group having 1 to 6 carbons, such as a methyl group, an ethyl group). Examples of the alicyclic dicarboxylic acid include a cycloalkanedicarboxylic acid such as a 1,4-cyclohexanedicarboxylic acid and a 1,3-cyclohexanedicarboxylic acid.

The alicyclic polyamide resin includes, for example, a condensed product of an alicyclic diamine component and an aliphatic dicarboxylic acid component.

The aromatic polyamide resin contains a polyamide in which at least one of an aliphatic diamine component and an aliphatic dicarboxylic acid component is an aromatic component in the aliphatic polyamide. Examples of the polyamide include a polyamide in which the diamine component is an aromatic diamine component, a polyamide in which the dicarboxylic acid component is an aromatic component, and an aromatic dicarboxylic acid. The aromatic polyamide-based resin may be a wholly aromatic polyamide of a polyamide (aramid) in which both of the diamine component and the dicarboxylic acid component are an aromatic component.

These polyamide-based resins may be used alone or in combination of two or more kinds. The polyamide-based resin may be an aromatic polyamide-based resin in which one of the aliphatic diamine component and the aliphatic dicarboxylic acid component is an aromatic component, but it is usually an aliphatic polyamide and/or an alicyclic polyamide. In addition, the polyamide-based resin (copolyamide, etc.) often has a long-chain alkylene group, for example, an alkylene group wherein the alkylene has 8 to 16 carbon atoms, etc., because of a dicarboxylic acid, a lactam and/or an aminocarboxylic acid (for example, at least one component selected from a lactam and an aminoalkanecarboxylic acid). The polyamide resin may be a copolyamide (copolymerized polyamide resin) whose characteristics can be adjusted according to the application.

Examples of the polycarbonate-based resin include an aromatic polycarbonate based on a bisphenol such as a bisphenol A type polycarbonate resin and an aliphatic polycarbonate such as a diethylene glycol bisallyl carbonate.

Examples of the polyurethane-based resin include a polyurethane-based resin obtained by reacting an aliphatic, an alicyclic or an aromatic diisocyanate; a polyol; and optionally a chain extender. Examples of the polyol include a polyester polyol, a polyether polyol such as a polytetramethylene ether glycol, and a polycarbonate polyol.

### (Adhesive Part)

The adhesive part is arranged at the distal end of the shaft member and is a part adhered to the adherend. Accordingly, the shape and the material of the adhesive part are not particularly limited as long as the adhesive part can adhere to the adherend, and in view of the fact that a composite having an excellent effect of the present invention can be obtained, the adhesive part is preferably made from a film-like pressure-sensitive adhesive held or surrounded by fibers made from a flexible material. The form of the adhesive part has already been described.

The pressure-sensitive adhesive is preferably at least one kind selected from the group consisting of an acrylic adhesive, a urethane adhesive, a rubber adhesive, and a silicone adhesive.

The acrylic polymer constituting the acrylic adhesive is preferably obtained by polymerizing a (meth)acrylic monomer having an alkyl group having 1 to 14 carbon atoms. In other words, it is preferable that a raw material monomer contains a (meth)acrylic monomer.

One or more kinds of the (meth)acrylic monomers can be used.

By using a (meth)acrylic monomer having an alkyl group having 1 to 14 carbon atoms, it becomes easy to control the peeling force to the adherend at a low state, and a composite excellent in light peeling property and re-peeling property can be obtained.

Specific examples of a (meth)acrylic monomer having an alkyl group having 1 to 14 carbon atoms include a methyl (meth)acrylate, an ethyl (meth)acrylate, an n-butyl (meth)acrylate, an s-butyl (meth)acrylate, a t-butyl (meth)acrylate, an isobutyl (meth)acrylate, a hexyl (meth)acrylate, a 2-ethylhexyl (meth)acrylate, an n-octyl (meth)acrylate, an isooctyl (meth)acrylate, an n-nonyl (meth)acrylate, an isononyl (meth)acrylate, an n-decyl (meth)acrylate, an isodecyl (meth)acrylate, an n-dodecyl (meth)acrylate, an n-tridecyl (meth)acrylate, and an n-tetradecyl (meth)acrylate.

In particular, the monomer component constituting the (meth)acrylic polymer preferably contains the (meth)acrylic monomer having an alkyl group having 1 to 14 carbon atoms in an amount of ≥ 50 mass% based on the total amount of 100 mass% of the monomer components. When the content is 50 mass% or more, the adhesive has more excellent cohesive force.

The (meth)acrylic polymer preferably contains a hydroxyl group-containing (meth)acrylic monomer as a raw material monomer. One or more kinds can be used as the hydroxyl group-containing (meth)acrylic monomer.

The use of the hydroxyl group-containing (meth)acrylic monomer facilitates control of the crosslinked structure of the adhesive, thereby facilitating control of a balance between improvement of wettability by flow and reduction of peeling force (adhesive force) in peeling.

Examples of the hydroxyl group-containing (meth)acrylic monomer include a 2-hydroxyethyl (meth)acrylate, a 2-hydroxypropyl (meth)acrylate, a 4-hydroxybutyl (meth)acrylate, a 6-hydroxyhexyl (meth)acrylate, an 8-hydroxyoctyl (meth)acrylate, a 10-hydroxydecyl (meth)acrylate, a 12-hydroxylauryl (meth)acrylate, a (4-hydroxymethylcyclohexyl) methyl acrylate, and an N-methylol (meth)acrylamide.

The method of polymerizing the (meth)acrylic polymer is not particularly limited, and the (meth)acrylic polymer can be polymerized by a known method such as a solution polymerization, an emulsion polymerization, a bulk polymerization and a suspension polymerization. The obtained polymer may be any of a random copolymer, a block copolymer, an alternating copolymer, and a graft copolymer.

The urethane-based adhesive is not particularly limited, and known urethane-based adhesives can be used. The urethane adhesive preferably comprises a urethane resin (urethane polymer) obtained by reacting a polyol with a polyisocyanate compound. Examples of the polyol include a polyether polyol, a polyester polyol, a polycarbonate polyol, and a polycaprolactone polyol.

Examples of the polyisocyanate compound include a diphenylmethane diisocyanate, a tolylene diisocyanate, and a hexamethylene diisocyanate.

The silicone adhesive is not particularly limited, and known silicone adhesives can be used. Examples of the silicone adhesive include a silicone resin (silicone-based polymer such as a polyorganosiloxane, a silicone component, etc.) to which a curing agent is added as necessary.

Examples of the silicone adhesive include an addition reaction curing type and a peroxide curing type.

The rubber adhesive is not particularly limited, and a known rubber adhesive can be used. Examples of the rubber-based adhesive include a natural rubber, a styrene-isoprene-styrene block copolymer (SIS block copolymer), a styrene-butadiene-styrene block copolymer (SBS block copolymer), a styrene-ethylene-butylene-styrene block copolymer (SEBS block copolymer), a styrene-butadiene rubber, a polybutadiene, a polyisoprene, a polyisobutylene, a butyl rubber, and a chloroprene rubber.

The pressure-sensitive adhesive may contain a crosslinking agent in addition to the polymer. The crosslinking agent is not particularly limited, and may include an isocyanate compound, an epoxy compound, a melamine-based resin, an aziridine derivative, and a metal chelate compound. The pressure-sensitive adhesive may contain one kind of the crosslinking agent alone or two or more kinds of the crosslinking agent.

The isocyanate compound is not particularly limited, and for example, an aliphatic polyisocyanate, an alicyclic isocyanate, an aromatic isocyanate, and a polyisocyanate-modified body can be used.

Examples of the aliphatic polyisocyanate include a trimethylene diisocyanate, a butylene diisocyanate, a hexamethylene diisocyanate (HDI), and a dimer acid diisocyanate.

Examples of the alicyclic isocyanate include a cyclopentylenediisocyanate, a cyclohexylenediisocyanate, an isophorone diisocyanate (IPDI), and a 1,3-bis (isocyanatomethyl) cyclohexane.

Examples of the aromatic isocyanate include a 2,4-tolylene diisocyanate, a 4,4'-diphenylmethane diisocyanate, and a xylylene diisocyanate (XDI).

Examples of the polyisocyanate-modified product include a polyisocyanate-modified product obtained by modifying an isocyanate compound by an allophanate bond, a biuret bond, an isocyanurate bond, an urethodione bond, a urea bond, a carbodiimide bond, a urethonimine bond, or an oxadiazinetrione bond.

Examples of the epoxy compound include, but are not limited to, an N, N, N', N'-tetraglycidyl-m-xylenediamine and a 1,3-bis (N, N-diglycidylaminomethyl) cyclohexane.

The melamine-based resin is not particularly limited, but hexamethylol melamine can be used.

Examples of the aziridine derivative include a product having a trade name of HDU, TAZM, and TAZO (these products are manufactured by Kyoyakuko Co., Ltd.).

Examples of the metal chelate compound include a metal chelate compound containing an aluminum, an iron, a tin, a titanium, and a nickel as a metal component; and containing an acetylene, a methyl acetoacetate, an and ethyl lactate as a chelate component.

The content of the crosslinking agent used in the present invention is not particularly limited, but is typically preferably 0.01 to 20 parts by mass based on 100 parts by mass of the resin.

The pressure-sensitive adhesive may further contain a crosslinking catalyst. Examples of the crosslinking catalyst include a tin-based catalyst and an iron-based catalyst. As the crosslinking catalyst, one kind may be used alone or two or more kinds may be used in combination.

Examples of the tin-based catalyst include a dibutyltin dilaurate and a dioctyltin dilaurate.

Examples of the iron-based catalyst include a tris (acetylacetonato) iron, a tris (hexane-2, 4-dionato) iron, a tris (heptane-2, 4-dionato) iron, a tris (heptane-3, 5-dionato) iron, a tris (5-methylhexane-2, 4-dionato) iron, a tris (octane-2, 4-dionato) iron, a tris (6-methylhexane-2, 4-dionato) iron, a tris (2, 6-dimethylheptane-3, 5-dionato) iron, a tris (nonane-2, 4-dionato) iron, a tris (nonane-4, 6-dionato) iron, a tris (2, 2, 6, 6-tetramethylheptane-3, 5-dionato) iron, a tris (tridecane-6, 8-dionato) iron, a tris (1-phenylbutane-1, 3-dionato) iron, a tris (hexafluoroacetylacetonato) iron, a tris (ethyl acetoacetate) iron, a tris (acetoacetic acid-n-propyl) iron, a tris (isopropyl acetoacetate) iron, a tris (acetoacetic acid-n-butyl) iron, a tris (acetoacetic acid-sec-butyl) iron, a tris (acetoacetic acid-tert-butyl) iron, a tris (methyl propionylacetate) iron, a tris (ethyl propionylacetate) iron, a tris (n-propyl propionylacetate) iron, a tris (isopropyl propionylacetate) iron, a tris (propionylacetic acid-n-butyl) iron, a tris (propionylacetic acid-sec-butyl) iron, a tris (propionylacetic acid-tert-butyl) iron, a tris (acetobenzyl acetate) iron, a tris (dimthyl malonate) iron, a tris (diethyl malonate) iron, trimethoxyiron, triethoxyiron, triisopropoxyiron, and a ferric chloride.

The content of the crosslinking catalyst in the pressure-sensitive adhesive is not particularly limited, but is typically preferably 0.0001 to 1 parts by mass with respect to 100 parts by mass of the resin.

The pressure-sensitive adhesive may further contain a solvent. The solvent may be, for example, an organic solvent, water, or a mixed solvent thereof. The content of the solvent in the pressure-sensitive adhesive is not particularly limited and can be appropriately adjusted. For example, the strength of adhesion to the adherend can be controlled by adjusting the content of the solvent to a predetermined amount.

When a material that does not soften even when the pressure-sensitive adhesive is moistened (or containing organic solvent) is used, the following method is effective.

The fibers are immersed in a liquid, pulled up from the liquid, and then placed on a plate with a flat surface like glass to solidify. As a result, the contact surface becomes flat and adhesion to the flat adherend surface is enhanced, thereby increasing the adhesive strength.

### HYDROGEL

The pressure-sensitive adhesive may be a hydrogel. When the pressure-sensitive adhesive is a hydrogel, the adhesion to the adherend can be easily controlled by adhering the composite to the adherend and then drying the composite. In other words, the adhesive strength can be further improved by drying, and/or the adhesive strength can be reduced by re-moistening.

The hydrogel is not particularly limited, and a known hydrogel can be used. Examples of the hydrogel include a form containing a hydrophilic polymer and water.

The hydrophilic polymer is not particularly limited, but, for example, a polysaccharide can be used. Examples of the polysaccharide include a methyl cellulose, an ethyl cellulose, an n-propyl cellulose, a hydroxyethyl cellulose, a hydroxy-n-propyl cellulose, a hydroxy-n-butyl cellulose, a hydroxypropyl methyl cellulose, an ethyl hydroxyethyl cellulose, a carboxymethyl cellulose, a carboxymethyl starch, a dextran sulfate, a dextran phosphate, a diethylamino dextran, a heparin, hyaluronan, a chondroitin, a chondroitin sulfate, a chondroitin, sulfate, a heparan sulfate, a polyglucuronic acid, a polymanuronic acid, a polygalacturonic acid, a sodium alginate, a propylene glycol alginate, a pectin, a gellan gum, a carrageenan, a glucomannan, a guar gum, a locust gum, an xanthan gum, a glucose, a carboxymethyl starch, a mannose, a galactose, an arabinose, a fucose, a ribose, a fructose, and a dextran.

The method of hydrogelating the polysaccharide is not particularly limited, but a method of adding a compound capable of supplying a polyvalent metal ion can be used. A compound capable of supplying a polyvalent metal ion means a water-soluble substance capable of releasing a divalent or more metal ions, and typically includes a salt containing a divalent or more metal ion. Examples of the divalent or more ions include a calcium ion and an aluminum ion.

Examples of the compound capable of supplying the polyvalent metal ion include a water-soluble calcium salt or a water-soluble calcium salt which exhibits water solubility in the presence of an organic acid; or a water-soluble aluminum salt.

Examples of the water soluble calcium salt or the water soluble calcium salt which exhibits water solubility in the presence of an organic acid include a calcium phosphate, a calcium chloride, a calcium lactate, a calcium gluconate and a calcium acetate. Examples of the calcium phosphate include a primary calcium phosphate, a secondary calcium phosphate, a secondary calcium phosphate dihydrate and a tertiary calcium phosphate

Examples of the water-soluble aluminum salt include an aluminum sulfate, an aluminum nitrate, an aluminum phosphate, and an aluminum acetate.

Alternatively, a citric acid can be used in place of the compound capable of supplying the polyvalent metal ion.

### (Support)

The shape of the support is not particularly limited, and may be a flat plate shape, a three-dimensional shape having a curved surface, or a shape obtained by combining them.

The material of the support is not particularly limited, and an organic material, an inorganic material, and a composite material thereof can be used.

The organic material is not particularly limited, but may be a resin. Examples of the resin include a polyester resin such as a polyethylene terephthalate (PET), a polycarbonate resin, a (meth)acrylic resin, an epoxy resin, a polyurethane resin, a polyamide resin, a polyolefin resin, a cellulose derivative, a silicone resin, and a polyvinyl alcohol (PVA).

When the support is in the form of a sheet, it may be a laminate having another layer. The other layer includes, but is not limited to, an adhesive layer.

### [Applications]

Since the composite has excellent adhesion to the adherend and excellent followability to the surface shape of the adherend, it can be preferably used for temporary fixing necessary in the process of recycling and/or producing an article. In particular, it is possible to replace the temporary fastening process conventionally performed by a suction cup.

### [SECOND EMBODIMENT OF COMPOSITE]

The composite according to a second embodiment of the present invention is a composite having an adhesive layer on a surface of the support opposite to the surface having the structure. Figure 6 is a schematic view of a composite according to the above embodiment. A composite 60 has a support 51, a plurality of structures 20 fixed on one surface of the support 51, and an adhesive layer 61 arranged on the other surface of the support 51.

According to the composite, by attaching the adhesive layer 61 side to an article to be fixed, the resulting article can be fixed to the adherend.

The structure and the form of the support have already been described, and the preferred form is the same. The adhesive layer is not particularly limited, and can be formed by using a known adhesive. The thickness is not particularly limited, and may be suitably determined according to the application. The thickness of the adhesive layer is typically preferably about 0.1 µm to 10 mm. Further, although there is no particular restriction on the adhesive that can be used for the adhesive layer, the pressure-sensitive adhesive described above can be used.

The composite may also have another layer on the adhesive layer. Examples of such a layer include a separator.

### [UNMANNED AIRCRAFT]

An unmanned aircraft (hereinafter referred to as "the present unmanned aircraft") according to an embodiment of the present invention is an unmanned aircraft having an airframe body, a plurality of arms extending radially from the airframe body, and a plurality of rotor blades arranged at a distal end of the arms, wherein the composite is arranged on the airframe body with the structure disposed outside.

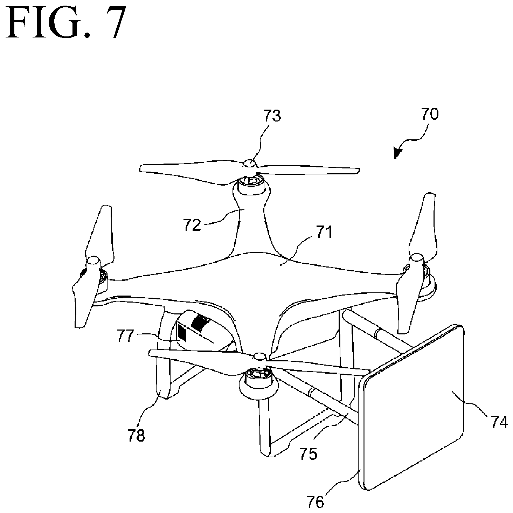

The aforementioned unmanned aircraft will be described with reference to the drawings. Figure 7 is a perspective view of the unmanned aircraft. An unmanned aircraft 70 has an airframe body 71, four arms 72 radially extending from the airframe body 71, and four rotors 73 arranged at the distal end of the arms. The arms 72 are arranged at equal intervals in a circumferential direction around a center of the airframe body 71.

The unmanned aircraft 70 has a pedestal 76 supported by a leg part 75, and on the surface of the pedestal 76, a composite 74 described above is arranged with the structure facing outwards. The unmanned aircraft 70 includes a battery case 77 in which a battery (not shown) for supplying power to the rotor 73 is housed. The unmanned aircraft 70 has a pair of legs 78 used for landing.

The unmanned aircraft 70 has a composite 74 (and a pedestal 76) on a surface side of the body 71. However, the unmanned aircraft according to the embodiment of the present invention is not limited to the above. The structure may be provided on an upper surface side and/or a lower surface side of the body 71. Further, a plurality of structures may be provided.

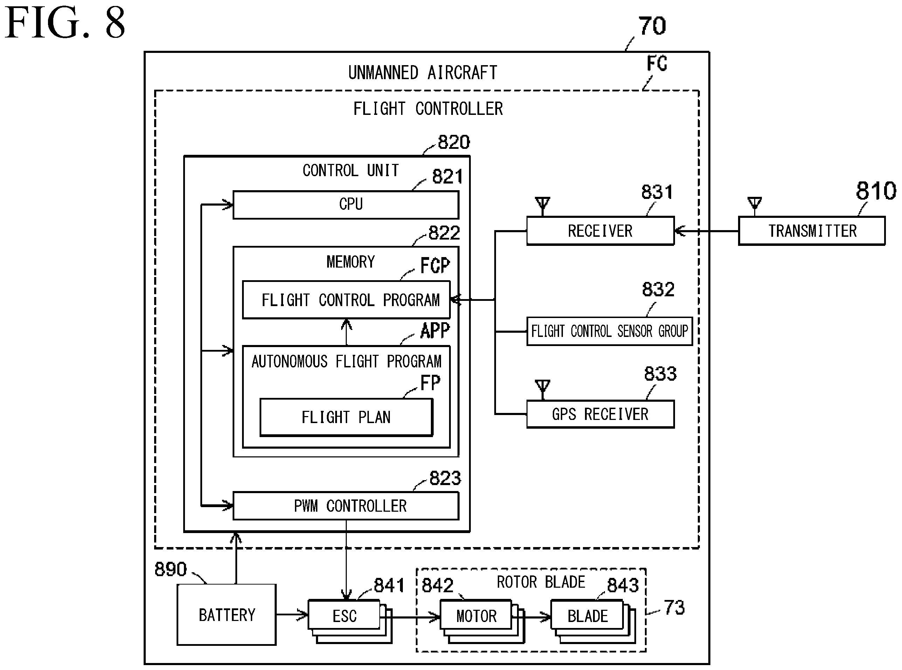

This unmanned aircraft 70 is similar to a known unmanned aircraft (especially an unmanned aircraft called a multi-copter) except that it has a composite 74 (and its pedestal, etc.). Figure 8 is a block diagram showing the functional configuration of this unmanned aircraft. The unmanned aircraft 70 is mainly equipped with a flight controller FC, four rotors 73, an ESC 841 (Electric Speed Controller) for controlling the rotation of the rotors 73, and a battery 890 for supplying electric power thereto.

Each rotor blade 73 comprises a motor 842 and a blade 843 connected to its output shaft. The ESC 841 is connected to the rotor motor 842 and rotates the motor 842 at a speed indicated by the flight controller FC.

The number of rotors of an unmanned aircraft is not particularly limited, and it is possible to appropriately change the number of rotors from a tricopter having three rotors to an octocopter having eight rotors, and further to a rotorcraft having more than eight rotors, depending on the required flight stability, acceptable cost, etc.

The flight controller FC includes a controller 820 which is a microcontroller. The controller 820 includes a CPU 821 as a central processing unit, a memory 822, and a PWM (Pulse Width Modulation) controller 823.

The memory 822 is a storage device such as ROM (Read Only Memory) and RAM (Random Access Memory).

The PWM controller 823 controls revolutions per minute and rotational speed of each motor 842 via the ESC 841.

The flight controller FC further includes a flight control sensor group 832 and a GPS (Global Positioning System) receiver 833 (hereinafter, these are also collectively referred to as "sensors, etc.") connected to the controller 820. The flight control sensor group 832 of the unmanned aircraft 70 includes a 3-axis acceleration sensor, a 3-axis angular velocity sensor, an atmospheric pressure sensor (altitude sensor), and an earth magnetic sensor (direction sensor).

The control device 820 can acquire position information of its own aircraft including an inclination of the aircraft, a rotation of the gas, a latitude and longitude during flight, an altitude, and an azimuth of the nose via these sensors.

A memory 822 of the controller 820 stores a flight control program FCP, which is a program in which an algorithm for controlling an attitude and a basic flight operation of the unmanned aircraft 70 during flight is mounted. The flight control program FCP, typically in accordance with an instruction from an operator (via transmitter 810), adjusts a rotational speed of each rotor based on the information acquired from the sensors, etc., and flies the unmanned aircraft 70 while correcting a turbulence in the attitude and the position of the airframe body.

The operation of the unmanned aircraft 70 can typically be performed manually by an operator using the transmitter 810. In addition, a flight plan FP, which is a parameter such as a flight path, a speed, and an altitude of the unmanned aircraft 70, can be registered in advance in an autonomous flight program APP, and the unmanned aircraft 70 can be made to fly autonomously to a destination (This kind of autonomous flight is referred to as "autopilot".).

As described above, the unmanned aircraft 70 has an advanced flight control function. However, the unmanned aircraft according to the embodiment of the present invention may be an airframe body having a plurality of rotors and controlling the attitude and the flight operation of the airframe by adjusting the rotational speed of each of the rotors. The unmanned aircraft according to the embodiment of the present invention may be, for example, an airframe body in which some of the sensors are omitted from the sensors, etc. or an airframe body which does not have an autopilot function and can fly only via manual operation.

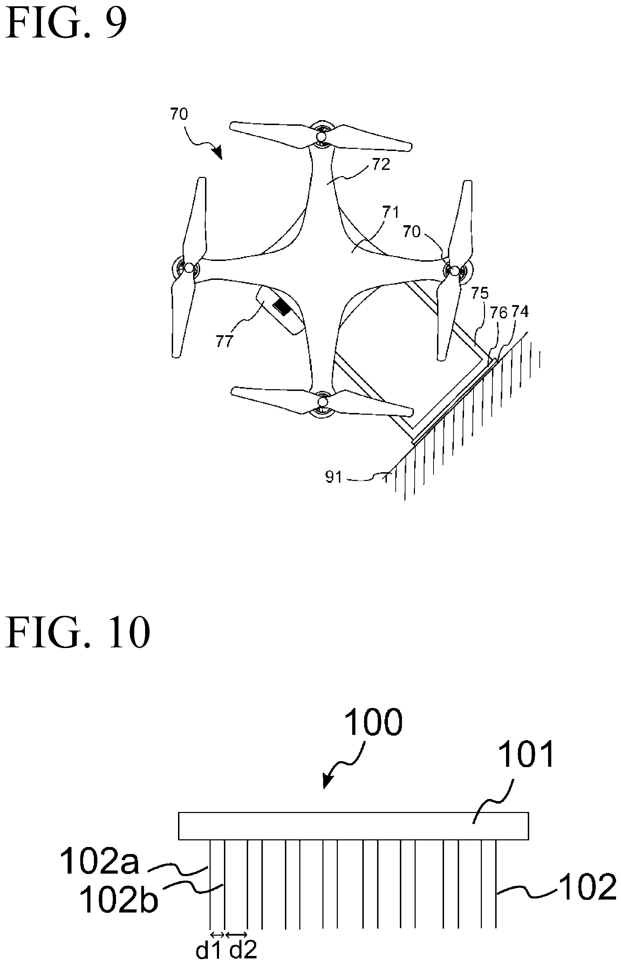

Next, Figure 9 shows a top view of a configuration in which the unmanned aircraft temporarily fixes the airframe body to the adherend using the composite. In the unmanned aircraft 70, the composite 74 arranged on the pedestal 76 is brought into contact with an adherend 91 (typically a wall surface), and the body is fixed to the adherend 91.

According to the present unmanned aircraft, since it can be temporarily fixed to any adherend, it does not consume battery power even when the unmanned aircraft is on standby or during an activity in a stationary state. Examples of the activity include a photography and an inspection of a concrete structure. Moreover, more stress can be generated than when stopping an unmanned aircraft in the air, so it is possible to perform a more diverse operation.

### [METHOD OF PRODUCING COMPOSITE (FIRST EMBODIMENT)]

A method of producing a composite (hereinafter also referred to as "the present production method") according to an embodiment of the present invention is a method of producing a composite having the following steps A1 to A4.

Step A1 is a step of obtaining a temporary support with fibers by fixing proximal ends of fibers made from a flexible material to at least one surface of the temporary support at a predetermined interval.

Step A2 is a step of immersing at least the fibers in a composition containing a pressure-sensitive adhesive.

Step A3 is a step of taking out the support with fibers from the composition, and obtaining a structure having a shaft member formed by bonding a plurality of the fibers by the surface tension of the composition, and an adhesive part which is formed on a proximal end side corresponding to the interval and which is made from the film-like pressure-sensitive adhesive held or surrounded by the fibers.

Step A4 is a step of separating the structure from the temporary support, fixing the shaft member to the support, and obtaining the composite.

According to the method of producing the composite, the composite can be produced easily. Hereinafter, the production method will be described in detail for each step.

### (Step A1)

Step A1 is a step of obtaining a temporary support with fibers by fixing the proximal ends of fibers made from a flexible material to at least one surface of the temporary support at a predetermined interval.

Figure 10 is a schematic view of a temporary support with fibers obtained in this step. A temporary support 100 with fibers has a temporary support 101 and a plurality of fibers 102 fixed on the temporary support 101.

The respective fibers are fixed at the predetermined intervals d1 and d2. The interval d1 determines the size of the film-like pressure-sensitive adhesive in the adhesive part as will be described later. In the temporary support 100 with fibers, the interval d1 is smaller than the interval d2. This is because the two fibers of a fiber 102a and a fiber 102b are adhered in a step A3 described later to form one shaft member. When three fibers are fused, the distance between the fibers to be fused is defined as d1, and the distance between the fibers other than the fibers to be fused is defined as d2.

The method of fixing the fiber on the temporary support is not particularly limited, and a known method can be used. Examples of the method of fixing the fiber include a method of fixing the fiber by using an adhesive.

A material of the temporary support is not particularly limited, but is preferably stable to the composition described later. In other words, a material which is not soluble in the composition to be described later is preferable. As the material of the temporary support, an organic material, an inorganic material, or a composite thereof can be used. Among them, paper is preferable because it is easy to handle.

A shape of the temporary support is not particularly limited, but a flat plate shape (sheet shape) is preferable from the viewpoint of ease of handling. The thickness of the temporary support is not particularly limited, and may be suitably determined within a range in which it is easy to handle according to the rigidity of the material of the temporary support.

Since a plurality of fibers are adhered in the step to be described later to form a shaft member, and the material thereof is the same as that of the shaft member already described, the description thereof is omitted, and the thickness (diameter) may be appropriately determined according to the desired thickness of the shaft member and the number of adhered fibers.

### (Step A2)

Step A2 is a step of immersing at least the fibers in a composition containing an adhesive. In step A2, the interval formed (defined) by the fibers is filled with the composition containing the adhesive.

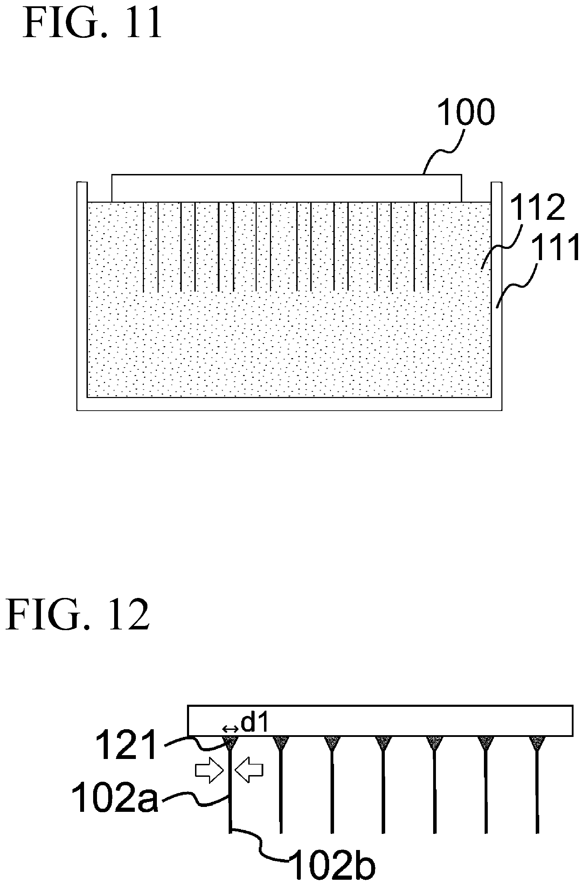

Figure 11 is a schematic view showing a state in which the fibers are immersed in the composition in this step. In Figure 11, a temporary support 100 with fibers is immersed in a composition 112 contained in a container 111. At this time, the whole of the fibers of the temporary support 100 with fibers is immersed in the composition 112, but in this step, a part or whole of the temporary support of the temporary support 100 with fibers may also be immersed.

The composition contains a pressure-sensitive adhesive. The form of the pressure-sensitive adhesive contained in the composition has already been described, and the preferred form is also the same, and therefore description thereof will be omitted. The composition is not particularly limited as long as it contains the pressure-sensitive adhesive, but it may contain another component. The other component includes, for example, a solvent. The solvent is not particularly limited, but includes water and/or an organic solvent. The organic solvent is not particularly limited, and a known organic solvent can be used, and a known organic solvent capable of dissolving or dispersing the adhesive can be used. A content of the pressure-sensitive adhesive in the composition is not particularly limited, but is preferably adjusted so that the solid content of the composition is 1 to 99 mass%.

### (Step A3)

Step A3 is a step of obtaining a structure. The structure has a shaft member and an adhesive part. The shaft member is formed by taking out the temporary support with fibers from the composition and bonding a plurality of the fibers by the surface tension of the composition. The adhesive part is formed of a film-like pressure-sensitive adhesive which is formed on the proximal end side corresponding to the interval and which is held or surrounded by the fibers.

Figure 12 is a schematic view of the temporary support with fibers taken out of the composition.

The interval formed (defined) by fibers 102a and 102b is filled with the composition in step A2. Thereafter, the temporary support with fibers is removed from the composition. Thereby, the fiber 102a and the fiber 102b are attracted to each other (indicated by arrows in Figure 12) by the surface tension of the composition filled between the fibers, and the fibers bond to each other. At this time, since the end portions of the fiber 102a and the fiber 102b are fixed to the temporary support, the whole fibers do not adhere to each other, and a portion 121 in which the composition remains is formed at the end portion. That is, the portion 121 is made from the composition which is held between the fiber 102a and the fiber 102b made from a flexible material. At this time, the size of the portion 121 is determined by the distance d1 between the fiber 102a and the fiber102b. The size of the portion 121 (which forms an adhesive part via the step described later) can be adjusted according to the interval of the fibers.

### (Step A4)

Step A4 is a step of separating the structure from the temporary support, fixing the shaft member to a support, and obtaining the composite.

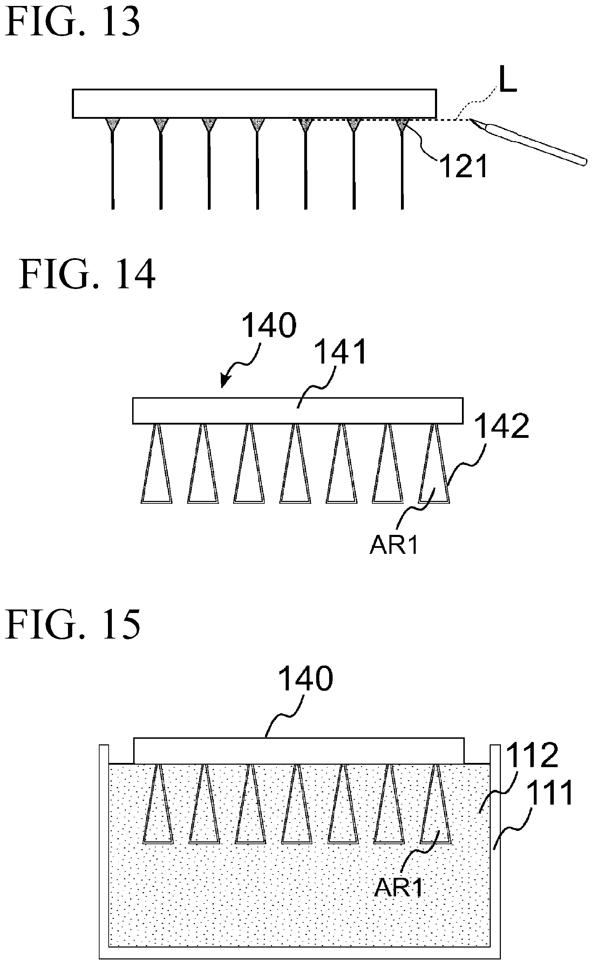

The method of separating the structure from the temporary support is not particularly limited, but as shown in Figure 13, the structure may be cut at the boundary between the portion 121 (constituting the adhesive part of the structure) and the temporary support (denoted by L in Figure 13). The composite is obtained by fixing the shaft member (typically an end portion) of the structure thus obtained to the support.

In this case, although the interval between the shaft members is not particularly limited, the interval between the shaft members is preferably 1 to 1.5 when the size (diameter) of the adhesive part is 1, in view of obtaining a better adhesive force, and the above-mentioned d1 and d2 may be adjusted appropriately so as to obtain such the configuration.

Preferably, the method further comprises a step of curing the pressure-sensitive adhesive after step A3; specifically after step A3 and before step A4, or after step A4. By curing the pressure-sensitive adhesive, the cohesive force can be controlled, and generation of a paste residue can be further suppressed. The method of curing the pressure-sensitive adhesive is not particularly limited, but typically includes a method of imparting energy such as light and/or heat and a method of contacting the pressure-sensitive adhesive with a curing agent.

For example, if the pressure-sensitive adhesive contains a resin such as the (meth)acrylic polymer described above, the method of contacting with the curing agent includes immersing at least the adhesive part of the structure after step A3 in a composition containing the curing agent prepared separately from the pressure-sensitive adhesive. In addition, when the pressure-sensitive adhesive contains the polysaccharides described above, a method of immersing at least the adhesive part of the structure in a composition containing a compound capable of supplying polyvalent metal ions prepared separately from the pressure-sensitive adhesive after the step A3 can be used. According to the production method having this step, the composite can be produced more easily.

In addition to the above, the production method may include a step of removing a solvent contained in the structure. The method of removing the solvent is not particularly limited, and may include a method of heat-treating the structure (or the structure and the support). The heat treatment method is not particularly limited, and a method of maintaining the heat treatment in an atmosphere at a predetermined temperature can be used. The temperature to be maintained is not particularly limited, but generally a temperature of 10°C to 100°C is preferable.

The present production method was completed based on the idea of the bristle formation process of the pupa of the fly, and after the structure is formed by the fiber, the composition is filled and the structure can be autonomously made by using the surface tension. The present method is excellent in that the structure having a more complicated shape can be more easily formed than a surface transfer method and the structure can be formed at a lower cost than a bottom-up method using carbon nanotubes.

### [METHOD OF PRODUCING COMPOSITE (MODIFIED EMBODIMENT OF FIRST EMBODIMENT)]

The method of producing the composite according to the modified embodiment of the first embodiment is a method of producing the composite having the following steps A1 to A4.

Step A1 is a step of obtaining a temporary support with fibers by fixing the proximal ends of fibers made from a flexible material to at least one surface of the temporary support at a predetermined interval.

The temporary support has a plurality of slits on at least the surface to which the fibers are fixed.

Step A2 is a step of immersing at least the fibers in a composition containing a pressure-sensitive adhesive.

Step A3 is a step of taking out the support with fibers from the composition, and obtaining a structure having a shaft member formed by bonding a plurality of the fibers by the surface tension of the composition, and an adhesive part which is formed on the proximal end side corresponding to the interval and which is made from the film-like pressure-sensitive adhesive held or surrounded by the fibers.

Step A4 is a step of separating the structure from the temporary support, fixing the shaft member to a support, and obtaining a composite.

### (Step A1)

Step A1 is a step of obtaining a temporary support with fibers in the same manner as in the first embodiment except that a plurality of slits are formed in the temporary support.

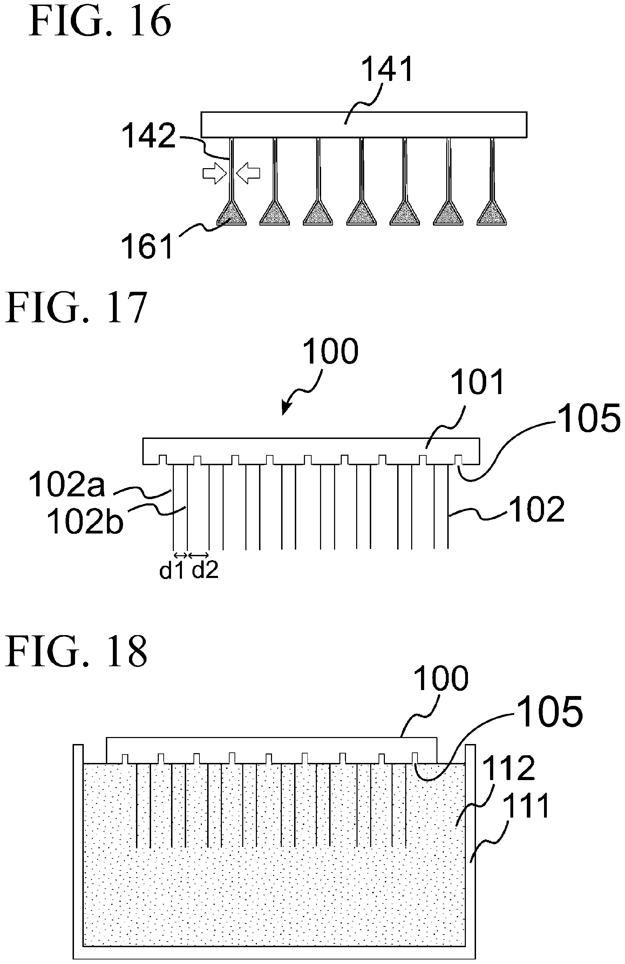

Figure 17 is a schematic view of the temporary support with fibers obtained in this step. The temporary support 100 with fibers has a temporary support 101 and a plurality of fibers 102 fixed on the temporary support 101. In the temporary support 101, a plurality of slits 105 are formed.

As in the first embodiment, when the respective fibers are fixed at predetermined intervals d1 and d2, intervals of the respective slits 105 may be (d1 + d2), for example.

As shown in Figure 17, when the slits 105 are arranged between the adhered pairs of fibers, a number of fibers can be simultaneously formed in a stable shape.

### (Steps A2 to A4)

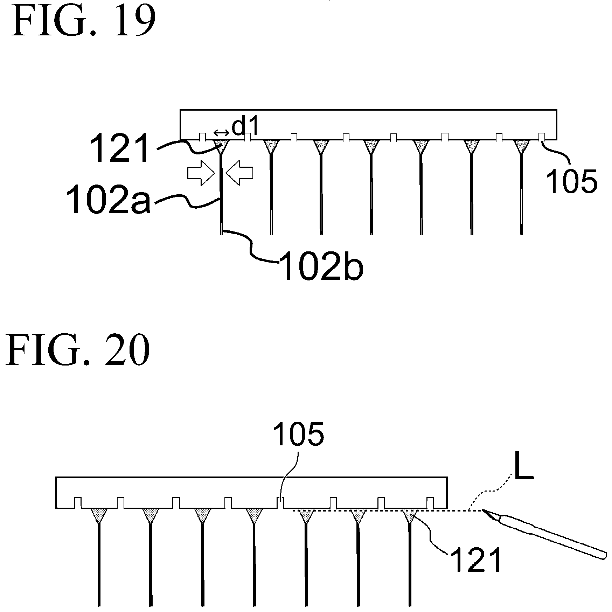

Steps A2 to A4 are steps for obtaining a composite in the same manner as in the first embodiment except that the temporary support with fibers obtained in step A1 of the present modification embodiment is used, as shown in Figures 18 to 20.

### [METHOD OF PRODUCING COMPOSITE (SECOND EMBODIMENT)]

A method of producing a composite (hereinafter also referred to as "the present production method") according to the present embodiment of the present invention is a method of producing a composite having the following steps B1 to B3.

Step B1 is a step of disposing a fiber made from a flexible material on at least one surface of a support, and obtaining a support with an annular fiber in which an annular region made from the fiber or an annular region made from the fiber and the surface is formed.

Step B2 is a step of immersing at least the fiber in a composition containing a pressure-sensitive adhesive and filling the region with the composition.

Step B3 is a step of taking out the support with the annular fiber from the composition and obtaining a structure having a shaft member which is formed by bonding at least a part of the fiber by the surface tension of the composition and which extending from the surface, and an adhesive part which is formed at the distal end of the shaft member and which is composed of a film-like pressure sensitive adhesive held or surrounded by the fiber.

According to the method of producing the composite, the composite can be more easily produced. Hereinafter, the production method will be described in detail for each step.

### (Step B 1)

Step B1 is a step of arranging a fiber made from a flexible material on at least one surface of a support, and obtaining a support with an annular fiber in which an annular region made from the fiber or an annular region made from the fiber and the surface is formed.

Figure 14 is a schematic view of a support with an annular fiber obtained in this step. A support 140 with the annular fiber has a support 141 and a plurality of fibers 142 fixed on the support 141.

Each fiber is fixed to the support surface, and each fiber and the support surface forms an annular region AR1. In Figure 14, the annular region AR1 is formed by the fiber and the support surface, but it is not limited to the above and may be formed (defined) only by the fiber.

It should be noted that the forms of the support and the fiber used in this step have already been described, and the preferred forms are also the same, and therefore description thereof will be omitted.

### (Step B2)

Step B2 is a step of immersing at least the fibers in a composition containing a pressure-sensitive adhesive and filling the region with the composition.

Figure 15 is a schematic view showing a state in which the fibers are immersed in the composition in this step. In Figure 15, a support 140 with an annular fiber is immersed in a composition 112 contained in a container 111. At this time, the whole fiber of the support 140 with the annular fiber is immersed in the composition 112, but in this step, a part or whole of the support 140 with the annular fiber may also be immersed.

The form of the composition used in this step is omitted because it is as described in the description of step A2.

In this step, when the fiber is immersed in the composition, the annular region AR1 is filled with the composition.

### (Step B3)

Step B3 is a step of obtaining a structure. The structure has a shaft member and an adhesive part. The shaft member is formed by taking out the support with the annular fiber from the composition and bonding at least a part of the fiber by the surface tension of the composition. The shaft member extends from the support surface. The adhesive part is formed at the distal end of the shaft member.

Figure 16 is a schematic view of a support with annular fibers taken out of the composition. When the annular region AR1 is filled with the composition in step B2 and pulled up, the surface tension of the filled composition attracts the fibers 142 forming the annular region toward each other (indicated by the arrows in Figure 16) and causes them to bond to each other. At this time, a portion 161 where the composition is accumulated is formed at a distal end of the annular region. This portion 161 constitutes an adhesive part of the structure.

At this time, the size of the portion 161 can be controlled by changing the elastic modulus of the fiber, the diameter of the fiber, the kind of the composition, the temperature, etc.

The method preferably further includes a step of curing the pressure-sensitive adhesive after step B3. By curing the pressure-sensitive adhesive, the cohesive force can be controlled, and the generation of the paste residue can be further suppressed. The method of curing the pressure-sensitive adhesive is not particularly limited, but typically includes a method of imparting energy such as light and/or heat and a method of contacting the pressure-sensitive adhesive with a curing agent.

For example, if the pressure-sensitive adhesive contains a resin such as the (meth)acrylic polymer described above, the method of contacting with the curing agent includes a method of immersing at least the adhesive part of the structure after step B3 in a composition containing the curing agent prepared separately from the pressure-sensitive adhesive. In addition, when the pressure-sensitive adhesive contains the polysaccharides described above, a method of immersing at least the adhesive part of the structure in a composition containing a compound capable of supplying polyvalent metal ions prepared separately from the pressure-sensitive adhesive after the step B3 can be used. According to the production method having this step, the composite can be manufactured more easily.

The method may further comprises, after step B3, a step of immersing the adhesive part of the formed structure back into the composition, removing it from the composition, and contacting it with a curing agent. This step can be repeated as necessary. In this case, the thickness of the film is increased at the adhesive part, and a hole is hardly opened during solidification, so that the film can be formed more stably. Examples of a shape of the formed adhesive part include a spatula shape, a circular shape, and an elliptical shape.

The portion of the boundary between the shaft member 21 and the proximal end 22 is a portion where stress is concentrated when the shaft member is adhered to the adherend and pulled, and is liable to break. Thus, the production method may further include, after step B3, a step of applying the adhesive again to the proximal end 22 portion of the formed structure. This step can be repeated as necessary. In this case, by applying the adhesive at the boundary between the shaft member 21 and the proximal end 22, it becomes more difficult to break and higher adhesive strength can be obtained.

In addition to the above, the production method may include a step of removing a solvent contained in a structure. The method of removing the solvent is not particularly limited, and includes a method of heat-treating the structure (or the structure and the support). The heat treatment method is not particularly limited, and a method of maintaining the heat treatment in an atmosphere at a predetermined temperature can be used. The temperature to be maintained is not particularly limited, but generally 10°C to 100°C is preferable.

The present production method was completed based on the idea of the bristle formation process of the pupa of the fly, and after the structure is formed by the fiber, the composition is filled and the structure can be autonomously made by using the surface tension. The present method is excellent in that the structure having a more complicated shape can be more easily formed than the surface transfer method and the structure can be formed at a lower cost than a bottom-up method using carbon nanotubes.

### EXAMPLES

The present invention will now be described in further detail with reference to examples. The materials, amounts used, ratios, treatment contents, and treatment procedures shown in the following examples may be changed as appropriate, unless they deviate from the purpose of the present invention. Accordingly, the scope of the present invention should not be construed in a limited manner by the following examples.

### Example 1

### Preparation of Composite A

An upper part of a nylon yarn (polyamide, nylon (Trade Mark) AYU SUICHUITO NL, manufactured by Line System Co., Ltd.) having a diameter of 0.1 mm was fixed on paper (made by Kokuyo, Tack index, thickness 0.14 mm, size 29 mm x 23 mm) at an interval of 1 mm to 2 mm, immersed in an aqueous solution of sodium alginate, and pulled up. At this time, a spatula-like structure (adhesive part) was formed by surface tension. Next, the spatula-like structure was immersed in an aqueous solution of calcium chloride to fix the shape, and then was dried. The produced adhesive structure was cut from the paper at the boundary between the spatula-like structure and the paper using the method shown in Figure 13. The shaft member (the opposite end of the spatula-like structure) of the obtained structure was fixed to a support (a glass substrate). Composite A of the present example was obtained. In addition, water was added to the composite before contacting the composite to an adherend.

The shear strength of 200 mN to 1400 mN per 1 piece of the above structure was obtained. It was observed that when the water content was lowered while the structure was in contact with the adherend, the strength increased and the structure could be fixed.

### [Description of Signs]

10: Bristle-forming cells
11: Actin fiber
12: Cell
20, 40: Structure
21, 41: Shaft member
22: Proximal end
23: Distal end
24: Pressure-sensitive adhesive
25, 25a, 25b, 43: Fiber
26, 44: Adhesive part
42: Pressure-sensitive adhesive
50, 60, 74: Composite
51, 141: Support
61: Adhesive layer
70: Unmanned aircrafts
71: Airframe body
72: Arm
73: Rotor
75: Legs
76: Pedestal
77: Battery case
78: Legs
91: Adherend
100: Temporary support with fiber
101: Temporary support
102, 102 a, 102 b, 142: Fiber
105: Slit
111: Container
112: Composition
121, 161: Partial
140: Support with annular fiber
810: Transmitter
820: Controller
821: CPU
822: Memory
823: Controller
832: Flight control sensor group
833: Receiver
842: Motor
843: Blade
890: Battery

## Claims

1. A method of producing a composite which comprises
a support and
a plurality of structures fixed to at least one surface of the support, wherein the structure comprises a shaft member made from a flexible material extending from a proximal end fixed to the support, and an adhesive part arranged at a distal end of the shaft member,
the method comprising:
a step A1 of fixing proximal ends of fibers made from a flexible material to at least one surface of a temporary support at a predetermined interval from each other to obtain a temporary support with fibers;
a step A2 of immersing at least the fibers in a composition containing a pressure-sensitive adhesive;
a step A3 of taking out the temporary support with fibers from the composition, and obtaining a structure having a shaft member formed by bonding a plurality of the fibers by the surface tension of the composition, and an adhesive part which is formed on a proximal end side corresponding to the interval and which is composed of a film-like pressure-sensitive adhesive held or surrounded by the fibers, wherein a film means a shape having a maximum diameter (width) of 10 µm to 5 mm and having a shape such as a circular shape, a semicircular shape, a sector shape, a polygonal shape, a spherical shape, a flat spherical shape, a long spherical shape, a cylindrical shape, or a triangular columnar shape; and
a step A4 of separating the structure from the temporary support, and fixing the shaft member to the support to obtain the composite,
wherein the flexible material is a material which is elastically deformable in relation to a stress required for an initial adhesion between the adhesive part and an adherend.

2. The method according to claim 1,
further comprising a step of curing the pressure-sensitive adhesive after the step A3.

3. The method according to claim 1 or 2,
wherein in the step A1, the temporary support has a plurality of slits on at least the surface to which the fibers are fixed.

4. A method of producing a composite which comprises
a support and
a plurality of structures fixed to at least one surface of the support, wherein the structure comprises a shaft member made from a flexible material extending from a proximal end fixed to the support, and an adhesive part arranged at a distal end of the shaft member,
the method comprising:
a step B1 of disposing a fiber made from a flexible material on at least one surface of a support, and obtaining a support with an annular fiber having an annular region formed by the fiber or the fiber and the surface;
a step B2 of immersing at least the fiber in a composition containing a pressure-sensitive adhesive and filling the region with the composition;
a step B3 of removing the support with the annular fiber from the composition to obtain a structure having a shaft member formed by adhering at least a part of the fiber by the surface tension of the composition and extending from the surface, and an adhesive part which is formed at the distal end of the shaft member and which is composed of a film-like pressure-sensitive adhesive held or surrounded by the fiber, wherein a film means a shape having a maximum diameter (width) of 10 µm to 5 mm and having a shape such as a circular shape, a semicircular shape, a sector shape, a polygonal shape, a spherical shape, a flat spherical shape, a long spherical shape, a cylindrical shape, or a triangular columnar shape,
wherein the flexible material is a material which is elastically deformable in relation to a stress required for an initial adhesion between the adhesive part and an adherend.

5. The method according to claim 4,
further comprising a step of curing the pressure-sensitive adhesive after the step B3.

6. The method according to claim any one of claims 1 to 5,
wherein the pressure-sensitive adhesive is at least one selected from the group consisting of an acrylic adhesive, a urethane adhesive, a rubber adhesive, and a silicone adhesive.

7. The method according to any one of claims 1 to 6,
wherein the pressure-sensitive adhesive is a hydrogel.

8. A composite obtained by the method according to any one of claims 1 to 7.

9. The composite according to claim 8,
further comprising an adhesive layer on a surface of the support opposite the one surface.

10. An unmanned aircraft, comprising:
an airframe body;
a plurality of arms radially extending from the airframe body; and
a plurality of rotors disposed at distal ends of the arms,
wherein the composite according to claim 8 or claim 9 is disposed on the airframe body with the structure facing outwards.

## Patentansprüche

1. Verfahren zur Herstellung eines Verbundwerkstoffs, der einen Träger und
eine Vielzahl von Strukturen umfasst, fixiert an mindestens einer Oberfläche des Trägers, wobei die Struktur ein Schaftelement umfasst, hergestellt aus einem flexiblen Material, das sich von einem proximalen Ende des Trägers erstreckt, und ein Klebstoffteil, das an einem distalen Ende des Schaftelements angeordnet ist,
das Verfahren umfassend:
einen Schritt A1 des Befestigens der proximalen Enden von Fasern, hergestellt aus einem flexiblen Material an mindestens einer Oberfläche eines temporären Trägers in einem vorbestimmten Abstand zueinander, um einen temporären Träger mit Fasern zu erhalten;
einen Schritt A2 des Eintauchens mindestens der Fasern in eine Zusammensetzung, enthaltend einen druckempfindlichen Klebstoff;
einen Schritt A3 des Herausnehmens des temporären Trägers mit Fasern aus der Zusammensetzung und des Erhalts einer Struktur mit einem Schaftelement, gebildet durch Verbinden einer Vielzahl der Fasern durch die Oberflächenspannung der Zusammensetzung , und eines Klebstoffteils, das an einer proximalen Endseite gebildet wird, entsprechend dem Intervall, und das aus einem filmartigen druckempfindlichen Klebstoff zusammengesetzt ist, gehalten oder umgeben von den Fasern , wobei ein Film eine Form mit einem maximalen Durchmesser (Breite) von 10 µm bis 5 mm und mit einer Form wie einer kreisförmigen Form, einer halbkreisförmigen Form, einer Sektorform, einer polygonalen Form, einer sphärischen Form, einer flachen sphärischen Form, einer langen sphärischen Form, einer zylindrischen Form oder einer dreieckigen säulenförmigen Form bedeutet; und
einen Schritt A4 des Trennens der Struktur vom temporären Träger und des Befestigens des Schaftelements am Träger, um den Verbundwerkstoff zu erhalten,
wobei das flexible Material ein Material ist, das in Bezug auf eine für eine anfängliche Adhäsion zwischen dem Klebstoffteil und einer Klebefläche erforderliche Belastung elastisch verformbar ist.

2. Verfahren nach Anspruch 1,
ferner umfassend einen Schritt des Aushärtens des druckempfindlichen Klebstoffs nach Schritt A3.

3. Verfahren nach Anspruch 1 oder 2,
wobei im Schritt A1 der temporäre Träger zumindest auf der Oberfläche, an der die Fasern befestigt sind, eine Vielzahl von Schlitzen hat.

4. Verfahren zur Herstellung eines Verbundwerkstoffs, der einen Träger und
eine Vielzahl von Strukturen umfasst, fixiert an mindestens einer Oberfläche des Trägers, wobei die Struktur ein Schaftelement umfasst, hergestellt aus einem flexiblen Material, das sich von einem proximalen Ende, befestigt an dem Träger, erstreckt, und ein Klebstoffteil, angeordnet an einem distalen Ende des Schaftelements,
das Verfahren umfassend:
einen Schritt B 1 des Anordnens einer Faser hergestellt aus einem flexiblen Material auf mindestens einer Oberfläche eines Trägers und des Erhalts eines Trägers mit einer ringförmigen Faser mit einem ringförmigen Bereich, gebildet durch die Faser oder die Faser und die Oberfläche;
einen Schritt B2 des Eintauchens mindestens der Faser in eine Zusammensetzung, enthaltend einen druckempfindlichen Klebstoff, und des Füllens des Bereichs mit der Zusammensetzung;
einen Schritt B3 des Entfernens des Trägers mit der ringförmigen Faser aus der Zusammensetzung, um eine Struktur zu erhalten mit einem Schaftelement, gebildet durch Anhaften mindestens eines Teils der Faser durch die Oberflächenspannung der Zusammensetzung und sich von der Oberfläche erstreckt, und einem Klebstoffteil, gebildet am distalen Ende des Schaftelements und der aus einem filmartigen druckempfindlichen Klebstoff besteht, gehalten oder umgeben von der Faser gehalten, wobei ein Film eine Form mit einem maximalen Durchmesser (Breite) von 10 µm bis 5 mm und eine Form wie eine kreisförmige Form, eine halbkreisförmige Form, eine Sektorform, eine polygonale Form, eine sphärische Form, eine flache sphärische Form, eine lange sphärische Form, eine zylindrische Form oder eine dreieckige säulenförmige Form bedeutet,
wobei das flexible Material ein Material ist, das in Bezug auf eine für eine anfängliche Adhäsion zwischen dem Klebstoffteil und einer Klebefläche erforderliche Belastung elastisch verformbar ist.

5. Verfahren nach Anspruch 4,
ferner umfassend einen Schritt des Aushärtens des druckempfindlichen Klebstoffs nach Schritt B3.

6. Verfahren nach einem der Ansprüche 1 bis 5,
wobei der druckempfindliche Klebstoff mindestens einer ist, ausgewählt aus der Gruppe bestehend aus einem Acrylklebstoff, einem Urethanklebstoff, einem Gummiklebstoff und einem Silikonklebstoff besteht.

7. Verfahren nach einem der Ansprüche 1 bis 6,
wobei der druckempfindliche Klebstoff ein Hydrogel ist.

8. Verbundwerkstoff, erhalten durch das Verfahren gemäß einem der Ansprüche 1 bis 7.

9. Verbundwerkstoff nach Anspruch 8,
ferner umfassend eine Klebstoffschicht auf einer Oberfläche des Trägers gegenüber der einen Oberfläche.

10. Unbemanntes Luftfahrzeug, umfassend:
einen Flugwerkkörper;
eine Vielzahl von Armen, sich radial vom Flugwerkkörper erstreckend;
und eine Vielzzahl von Rotoren, angeordnet an den distalen Enden der Arme,
wobei der Verbundwerkstoff nach Anspruch 8 oder Anspruch 9 auf dem Flugwerkkörper mit nach außen weisender Struktur angeordnet ist.

## Revendications

1. Procédé de production d'un composite qui comprend
un support et
une pluralité de structures fixées à au moins une surface du support, la structure comprenant un élément tige fait d'un matériau flexible s'étendant à partir d'une extrémité proximale fixée au support, et une partie adhésive agencée à une extrémité distale de l'élément tige,
le procédé comprenant :
une étape A1 consistant à fixer des extrémités proximales de fibres faites d'un matériau flexible à au moins une surface d'un support temporaire à un intervalle prédéterminé les unes des autres pour obtenir un support temporaire à fibres ;
une étape A2 consistant à immerger au moins les fibres dans une composition contenant un adhésif sensible à la pression ;
une étape A3 consistant à sortir le support temporaire à fibres de la composition, et à obtenir une structure ayant un élément tige formé par liaison d'une pluralité des fibres par la tension superficielle de la composition, et une partie adhésive qui est formée côté extrémité proximale correspondant à l'intervalle et qui est composée d'un adhésif sensible à la pression du type film retenu ou entouré par les fibres, le terme film signifiant une forme ayant un diamètre maximal (largeur) de 10 µm à 5 mm et ayant une forme telle qu'une forme circulaire, une forme semi-circulaire, une forme de secteur, une forme polygonale, une forme sphérique, une forme sphérique aplatie, une forme sphérique allongée, une forme cylindrique ou une forme de colonne triangulaire ; et
une étape A4 consistant à séparer la structure du support temporaire, et à fixer l'élément tige au support pour obtenir le composite,
dans lequel le matériau flexible est un matériau qui est élastiquement déformable relativement à une contrainte requise pour une adhérence initiale entre la partie adhésive et un substrat.

2. Procédé selon la revendication 1,
comprenant en outre une étape consistant à cuire l'adhésif sensible à la pression après l'étape A3.

3. Procédé selon la revendication 1 ou 2,
dans lequel à l'étape A1, le support temporaire présente une pluralité de fentes sur au moins la surface à laquelle les fibres sont fixées.

4. Procédé de production d'un composite qui comprend
un support et
une pluralité de structures fixées à au moins une surface du support, la structure comprenant un élément tige fait d'un matériau flexible s'étendant à partir d'une extrémité proximale fixée au support, et une partie adhésive agencée à une extrémité distale de l'élément tige,
le procédé comprenant :
une étape B 1 consistant à disposer une fibre faite d'un matériau flexible sur au moins une surface d'un support, et à obtenir un support à fibre annulaire présentant une région annulaire formée par la fibre ou par la fibre et la surface ;
une étape B2 consistant à immerger au moins la fibre dans une composition contenant un adhésif sensible à la pression et à remplir la région de la composition ;
une étape B3 consistant à retirer le support à fibre annulaire de la composition pour obtenir une structure ayant un élément tige formé par adhérence d'au moins une partie de la fibre par la tension superficielle de la composition et s'étendant à partir de la surface, et une partie adhésive qui est formée à l'extrémité distale de l'élément tige et qui est composée d'un adhésif sensible à la pression du type film retenu ou entouré par la fibre, le terme film signifiant une forme ayant un diamètre maximal (largeur) de 10 µm à 5 mm et ayant une forme telle qu'une forme circulaire, une forme semi-circulaire, une forme de secteur, une forme polygonale, une forme sphérique, une forme sphérique aplatie, une forme sphérique allongée, une forme cylindrique ou une forme de colonne triangulaire ; et
dans lequel le matériau flexible est un matériau qui est élastiquement déformable relativement à une contrainte requise pour une adhérence initiale entre la partie adhésive et un substrat.

5. Procédé selon la revendication 4,
comprenant en outre une étape consistant à cuire l'adhésif sensible à la pression après l'étape B3.

6. Procédé selon n'importe laquelle des revendications 1 à 5,
dans lequel l'adhésif sensible à la pression est au moins un adhésif sélectionné dans le groupe constitué d'un adhésif acrylique, d'un adhésif uréthane, d'un adhésif caoutchouc et d'un adhésif silicone.

7. Procédé selon n'importe laquelle des revendications 1 à 6,
dans lequel l'adhésif sensible à la pression est un hydrogel.

8. Composite obtenu par le procédé selon n'importe laquelle des revendications 1 à 7.

9. Composite selon la revendication 8,
comprenant en outre une couche adhésive sur une surface du support opposée à ladite surface.

10. Aéronef sans pilote, comprenant :
un corps de cellule ;
une pluralité de bras s'étendant radialement à partir du corps de cellule ; et
une pluralité de rotors disposés à des extrémités distales des bras,
dans lequel le composite selon la revendication 8 ou la revendication 9 est disposé sur le corps de cellule avec la structure tournée vers l'extérieur.
